# EUROPÄISCHE PATENTSCHRIFT

(11) **EP 1 411 267 B1**
(45) Veröffentlichungstag und Bekanntmachung des Hinweises auf die Patenterteilung: **26.07.2006**
(21) Anmeldenummer: 03022769.8
(22) Anmeldetag: 10.10.2003
(51) Int. Cl.: F16F 15/131

(54) **Torsionsschwingungsdämpfer**
Torsional vibration damper
Amortisseur de vibrations torsionelles

(30) Priorität: 15.10.2002 DE 10248135
(43) Veröffentlichungstag der Anmeldung: 21.04.2004
(73) Patentinhaber: ZF Sachs AG, 97424 Schweinfurt (DE)
(72) Erfinder: Bach, Hartmut, Dipl.-Ing., 97422 Schweinfurt (DE); Weth, Jürgen, Dipl.-Ing.(FH), 97464 Niederwerrn (DE); Carlson, Cora, 97456 Dittelbrunn (DE)

(56) Entgegenhaltungen:
- DE-A- 10 109 249
- DE-A- 19 843 544
- DE-U- 8 332 921
- US-A- 4 790 419
- US-A- 5 784 928

## Beschreibung

Die Erfindung betrifft einen Torsionsschwingungsdämpfer gemäß dem Oberbegriff des Anspruches 1.

Durch die DE 101 09 249 A1 ist ein Torsionsschwingungsdämpfer bekannt mit einem antriebsseitigen Übertragungselement, das an einen Antrieb, wie der Kurbelwelle einer Brennkraftmaschine, mittels Befestigungselementen angebunden ist, mit einem abtriebsseitigen Übertragungselement, das relativ zu dem antriebsseitigen Übertragungselement drehbar ist, und mit einer zwischen den beiden Übertragungselementen vorgesehenen Dämpfungsvorrichtung, die mit den Übertragungselementen in Wirkverbindung stehende elastisch verformbare Kraftspeicher aufweist. Das antriebsseitige Übertragungselement verfügt über einen an einer Aufnahmefläche des Antriebs befestigten, mit Durchgängen für Verbindungsbereiche für die Befestigungsmittel versehenen Radialflansch und ein mit demselben fest verbundenes erstes Deckblech, das im Erstreckungsbereich der Befestigungselemente mit einem Radialabschnitt versehen ist, der axial zwischen dem Stützring und dem Radialflansch aufgenommen ist, und zum Durchtritt der Verbindungsbereiche der Befestigungselemente Öffnungen aufweist, die für eine Passage der Verbindungsbereiche der Befestigungselemente bis in den Antrieb in Bezug zu den Durchgängen im Radialflansch ausgerichtet sind. Der Stützring übernimmt hierbei offenbar die Funktion, an den durch die Schraubenköpfe gebildeten Haltebereichen der Befestigungselemente ein Einarbeiten der Schraubenköpfe in das erste Deckblech zu vermeiden. Diese Gefahr besteht aus folgendem Grund:

Das erste Deckblech dient ebenso wie ein zweites Deckblech, das von einer am Radialflansch in dessen radial äußerem Bereich vorgesehenen Axialerstreckung umhüllt ist, als Auskleidung einer zumindest teilweise mit viskosem Medium befüllten Kammer der Dämpfungsvorrichtung. Die beiden Deckbleche müssen demnach zum einen gut verformbar sein, um die Kammer in gewünschter Weise auszukleiden, und sollten zudem eine Dichtwirkung entfalten, gegebenenfalls unter Ausbildung einer Schweißnaht. Üblicherweise wird zur Gewährleistung guter Verform- und Schweißbarkeit ein Stahl Verwendung finden, der über eine vergleichsweise geringe Festigkeit verfügt. Ein aus einem derartigen Stahl bestehendes Deckblech erscheint demnach ungeeignet, um die Befestigungselemente in deren Haltebereichen wirksam abzustützen, zumal wenn Taumelbewegungen einer Kurbelwelle des Antriebes auftreten sollten.

Aus der DE 34 47 181 A1 ist, insbesondere aus den Fig. 1 und 2, ein Torsionsschwingungsdämpfer bekannt, der mit einem antriebsseitigen Übertragungselement ausgebildet ist, das über einen Radialflansch und zwei Deckbleche verfügt, von denen das antriebsseitige Deckblech radial außen am Radialflansch fest angebunden und gemeinsam mit diesem über Befestigungselemente, wie beispielsweise Schrauben, an einem Antrieb, wie der Kurbelwelle einer Brennkraftmaschine, insbesondere hierbei dem Kurbelwellenflansch, befestigt ist. Die Befestigungselemente kommen hierbei jeweils mit einem durch den Schraubenkopf gebildeten Haltebereich über die an demselben ausgebildete, dem Radialflansch zugewandte Anlagefläche am Radialflansch in Anlage und durchdringen jeweils mit einem durch einen Gewindezapfen gebildeten Verbindungsbereich einen jeweils zugeordneten Durchgang des Radialflansches, um letztendlich in eine Aufnahmeöffnung der Kurbelwelle einzugreifen, und, nach Anziehen des Befestigungselementes, den Radialflansch an einer Aufnahmefläche der Kurbelwelle fest in Anlage zu halten.

Die erwähnten Deckbleche sind drehfest miteinander verbunden und verfügen über Ausnehmungen für Kraftspeicher, die zudem in einer jeweils zugeordneten Ausnehmung einer axial zwischen den beiden Deckblechen vorgesehenen Nabenscheibe aufgenommen sind. Die Kraftspeicher ragen in Achsrichtung über beide Deckbleche hinaus, weshalb ein jedem Deckblech benachbartes Bauteil, antriebsseitig also der Primärflansch und abtriebsseitig ein Massering, jeweils mit einer Querschnittsreduzierung versehen ist, die zumindest teilweise der Umfangskontur der Kraftspeicher angepasst ist.

Radial außerhalb der Kraftspeicher ist eine Drehwinkelbegrenzung sowie eine Reibvorrichtung vorgesehen.

Durch den Radialflansch wird gemeinsam mit einem an dessen Außenumfang vorgesehenen Zahnkranz mit einem antriebsseitigen Massering und den Deckblechen ein antriebsseitiges Übertragungselement des Torsionsschwingungsdämpfers gebildet, während die Nabenscheibe, die radial innen mit einem Lagerbereich versehen ist, zusammen mit dem abtriebsseitigen Massering als abtriebsseitiges Übertragungselement dient. über den Lagerbereich greift die Nabenscheibe an einer Lagerung an, die auf einer mit dem Antrieb fest verbundenen Hülse angeordnet und durch ein Distanzelement in vorbestimmtem Abstand zum Radialflansch gehalten ist. Durch die Lagerung wird eine Zentrierung der beiden Übertragungselemente zueinander erzielt, während das Distanzelement für eine axiale Positionierung der Übertragungselemente sorgt.

Da bei dem Torsionsschwingungsdämpfer der Primärflansch massereich ausgebildet ist und aufgrund seiner im radial äußeren Bereich vorzufindenden, topfartigen Gestaltung eine erhebliche Massivumformung erfordert, dürfte aus Kostengründen sowie zugunsten guter Verformbarkeit auf Werkstoffe mit vergleichsweise geringer Verformungsfestigkeit zurückgegriffen werden. Dabei treten allerdings folgende Probleme auf:

Kurbelwellen an Brennkraftmaschinen sind im Betrieb Biegeschwingungen unterworfen, die zu Taumelbewegungen des Radialflansches führen. Im Hinblick auf diese Taumelbewegungen macht sich die hohe Trägheit des Radialflansches, insbesondere wenn dieser mit Zusatzmasse und Zahnkranz versehen ist, negativ bemerkbar, indem der Radialflansch mit seinen Taumelbewegungen den an der Aufnahmefläche der Kurbelwelle anliegenden Bewegungen nacheilt und dadurch im radial äußeren Bereich des Kurbelwellenflansches hohe Axialkräfte entstehen lässt, die trotz hoher Vorspannung, mit welcher der Radialflansch am Kurbelwellenflansch befestigt ist, zu hochfrequenten axialen Mikrobewegungen zwischen den besagten Bauteilen führen. Diese Mikrobewegungen haben eine Materialschädigung zur Folge, die zur Bildung von Mikrorissen und anschließend sogar zum Bruch insbesondere des Radialflansches führen können.

Am Radialflansch ist an dessen den Schraubenköpfen zugewandter Axialseite damit zu rechnen, dass sich die Befestigungselemente aufgrund der hohen Vorspannung, mit welcher sie den Radialflansch an der Kurbelwelle in Anlage halten sollen, zu einer Einarbeitung der Letztgenannten in den zugeordneten Anlagebereichen des Radialflansches führen werden.

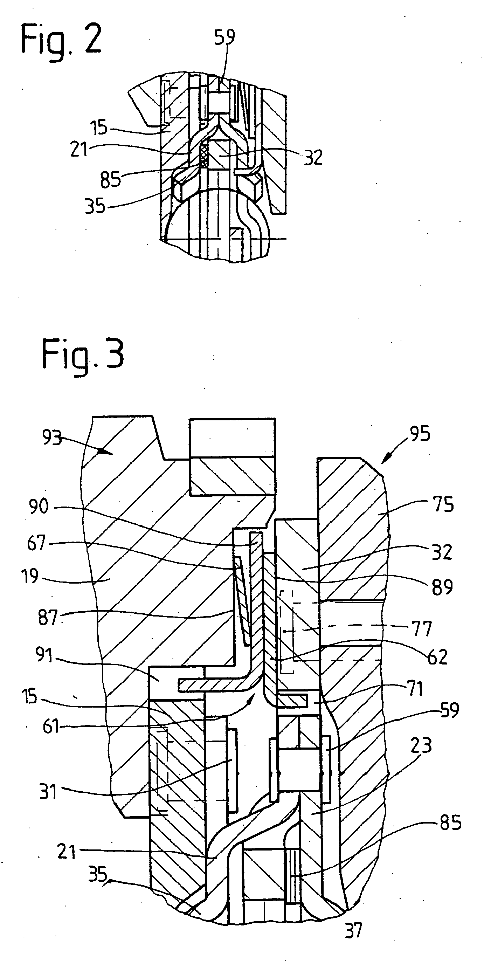

Um den vorgenannten Problemen abzuhelfen, ist in der DE 198 45 694 A1 vorgesehen, an einem Torsionsschwingungsdämpfer gemäß den Fig. 2 bis 8 axial zwischen einem Kurbelwellenflansch eines Antriebes und einem Radialflansch des antriebsseitigen Übertragungselementes des Torsionsschwingungsdämpfers eine Zwischenlage vorzusehen, die eine höhere Verformungsfestigkeit als der Radialflansch und/oder eine spezielle geometrische Gestalt aufweisen kann, um für eine gleichmäßigere Verteilung eingeleiteter Spannungen zu sorgen. Auch an der eventuellen Schraubenköpfen von Befestigungselementen zugewandten Seite des Radialflansches ist bei einigen konstruktiven Ausführungen, wie beispielsweise in Fig. 8, vorgesehen, eine Zwischenlage mit erhöhter Verformungssteifigkeit und/oder spannungsverteilender geometrischer Formgebung zu installieren. Andere konstruktive Ausführungen dieser Patentanmeldung, wie beispielsweise in Fig. 9 gezeigt, versuchen dagegen dieses Problem durch Vergütungs- oder Beschichtungsmaßnahmen am Radialflansch zu lösen.

Durch diese Maßnahmen mag zwar das Risiko einer Rissbildung am Radialflansch unmittelbar radial außerhalb des Kurbelwellenflansches ebenso wie ein Einarbeiten der Schraubenköpfe von Befestigungselementen gemildert sein, jedoch wird die bessere Haltbarkeit durch einen komplizierteren fertigungstechnischen Aufbau mit zusätzlichen Bauteilen sowie erhöhten Herstellungskosten durch Vergütungs- oder Beschichtungsmaßnahmen erkauft.

Der Erfindung liegt die Aufgabe zugrunde, einen Torsionsschwingungsdämpfer derart auszubilden, dass dieser ohne Folgeschäden bei Taumelbewegungen einer Kurbelwelle des Antriebes am Letztgenannten angebunden werden kann und dennoch eine möglichst einfache konstruktive Ausführung realisiert ist.

Diese Aufgabe wird erfindungsgemäß durch die im Kennzeichen des Anspruches 1 angegebenen Merkmale gelöst.

Durch Ausbildung des antriebsseitigen Deckbleches wenigstens im Erstreckungsbereich der Befestigungselemente mit einem axial zwischen einer Anlagefläche der Befestigungselemente und dem Radialflansch verlaufenden Radialabschnitt wird dieses Deckblech axial gegen die benachbarte Seite des Radialflansches gepresst, und verschafft diesem somit gerade im kritischen Radialbereich seiner Kontaktzone zur Aufnahmefläche am Kurbelwellenflansch der Kurbelwelle eines Antriebes, wie beispielsweise einer Brennkraftmaschine, eine Querschnittsvergrößerung, die bei Einleitung von Taumelbewegungen durch den Antrieb stabilisierend wirkt. Insbesondere kann es hierbei zu Relativbewegungen zwischen dem Radialflansch und dem Radialabschnitt des Deckbleches kommen, wobei diese Relativbewegungen aufgrund der Großflächigkeit der besagten Kontaktbereiche keinen störenden Einfluss ausüben, stattdessen aber dämpfend auf die Taumelbewegungen wirken. Darüber hinaus kann ohne konstruktive oder finanzielle Mehraufwendungen die üblicherweise hohe Verformungsfestigkeit des Deckbleches in vorteilhafter Weise ausgenutzt werden, wobei das Deckblech diese Verformungsfestigkeit hauptsächlich im Erstreckungsbereich von Ausnehmungen für vorzugsweise in Umfangsrichtung verlaufende Kraftspeicher benötigt, um einer Einarbeitung dieser Kraftspeicher unter der Wirkung von Torsionsschwingungen in das Deckblech vorbeugen zu können. Da ein Deckblech üblicherweise in seiner Gesamtheit aus einem Werkstoff besteht, ist dieses auch bei Kontakt mit den Anlageflächen der Befestigungselemente gegen übermäßige Einarbeitung gesichert, und vermag gleichzeitig die von den Haltebereichen der Befestigungselemente ausgeübten Axialkräfte großflächig auf den Radialflansch zu übertragen. Somit kann dieser aus einem verformungsgünstigen Werkstoff hergestellt sein, was neben fertigungstechnischen Verformbarkeitsvorteilen auch Kostenvorteile mit sich bringt.

Üblicherweise verfügen bei Torsionsschwingungsdämpfern die Deckbleche zugunsten einer guten Fliehkraftabstützung für die Kraftspeicher über radial außerhalb der letztgenannten vorgesehene Ausstellungen, die durch axiales Herausdrücken von Lappen aus den Deckblechen hergestellt werden. Gemäß einer bevorzugten Ausführungsform des Torsionsschwingungsdämpfers vermögen die antriebsseitigen Ausstellungen in eine am Radialflansch ausgebildete Querschnittsreduzierung axial einzugreifen, sodass trotz des den Radialflansch versteifenden Deckbleches ein nur unwesentlich höherer axialer Bauraumbedarf besteht. Die Querschnittsreduzierung hat gegenüber einer bei gleichem axialen Bauraumbedarf ansonsten notwendigen Ausnehmung für die Kraftspeicher im Radialflansch eine höhere Stabilität desselben zur Folge, insbesondere, wenn diese Querschnittsreduzierung durch eine fertigungsbedingte Materialverdichtung, wie einem Prägen, erfolgt, sodass der geringere axiale Querschnitt des Radialflansches in diesem Bereich durch die Materialverdichtung im Gefüge zumindest teilweise kompensiert wird.

Das erfindungsgemäße Deckblech übernimmt zusätzlich zu seinen bislang beschriebenen Funktionen auch die Bildung einer Drehwinkelbegrenzung zwischen dem antriebsseitigen Übertragungselement und dem abtriebsseitigen Übertragungselement, sodass bei Einleitung sehr starker Torsionsschwingungen verhindert werden kann, dass die Kraftspeicher mit ihren einzelnen Federwindungen aneinander schlagen und dadurch aufgrund innerer Torsionsspannungen zu Bruch gehen können. Um die Torsionsschwingungen erst gar nicht so stark anwachsen zu lassen, ist der Torsionsschwingungsdämpfer vorzugsweise mit einer Reibvorrichtung versehen, die, sofern sie in einem der beiden Übertragungselemente aufgenommen ist, zwei axiale Anlagewandungen vorfindet, die ungeachtet eventueller, von außen eingeleiteter axialer Kräfte, wie beispielsweise durch eine Reibungskupplung beim Ein- oder Ausrücken, stets durch gleichen axialen Abstand voneinander für eine konstante Vorspannung eines Axialkraftspeichers sorgen, durch welchen die einzelnen Elemente der Reibvorrichtung, wie beispielsweise Mitnehmer, beaufschlagt werden. Von diesen Mitnehmern wird üblicherweise ein erster Mitnehmer mit einem der beiden Übertragungselemente und ein zweiter Mitnehmer mit dem jeweils anderen Übertragungselement in Drehverbindung stehen, wobei diese Drehverbindung je nach Auslegung der Reibvorrichtung spielfrei oder mit vorbestimmtem Spiel in Umfangsrichtung hergestellt sein kann.

Die Reibvorrichtung ist bevorzugt im radial äußeren Bereich des Torsionsschwingungsdämpfers vorgesehen, und hierbei gemäß einer vorteilhaften Ausführungsform in einem Aufnahmeraum eines der Übertragungselemente. Durch Einsatz der Reibvorrichtung im radial äußeren Bereich wird auch bei nur mäßiger Vorspannung des Axialkraftspeichers eine genügende Reibwirkung realisierbar sein, und auch im Hinblick auf das Verschleißverhalten ist eine radial relativ weit außen angeordnete Reibvorrichtung von Vorteil.

Weiterhin ist die Nabenscheibe des Torsionsschwingungsdämpfers mit einer Lagernabe fest verbunden, die über einen Lagerbereich verfügt, und dadurch eine Zentrierung der beiden Übertragungselemente zueinander ermöglicht. Mit Vorzug kann hierbei die Nabenscheibe aus einem Werkstoff geringer Verformungsfestigkeit hergestellt sein, um in beliebiger Weise geometrisch formbar zu sein, während die Lagernabe mit höherer Verformungsfestigkeit ausgebildet ist und hierdurch für eine saubere Führung des abtriebsseitigen Übertragungselementes geeignet ist.

Zur Vorgabe einer festen axialen Relativposition zwischen dem antriebsseitigen Übertragungselement und dem abtriebsseitigen Übertragungselement wird mit Vorzug axial zwischen Bauteilen derselben ein Distanzelement vorgesehen, das beispielsweise als axiales Kunststofflager ausgebildet sein kann. Mit Vorzug ist dieses Distanzelement zwischen dem antriebsseitigen Deckblech und der Nabenscheibe angeordnet, und zwar im wesentlichen in demjenigen Bereich, in welchem der im Erstreckungsbereich der Befestigungselemente verlaufende Radialabschnitt des Deckbleches für eine besondere Verformungsfestigkeit sorgt. Axialkräfte, die beispielsweise beim Ein- oder Ausrücken der Reibungskupplung über das abtriebsseitige Übertragungselement eingeleitet werden, können auf direktem Weg an der Kurbelwelle der Brennkraftmaschine und damit am Antrieb abgestützt werden. Eine weitere vorteilhafte Anordnungsposition des Distanzelementes kann, wiederum zwischen dem antriebsseitigen Deckblech und der Nabenscheibe, radial außerhalb der Ausstellungen am Deckblech, aber radial innerhalb der Drehwinkelbegrenzung vorgesehen sein, mithin also in einem Radialbereich, in welchem sich das antriebsseitige Deckblech direkt am Radialflansch abstützt, und zwar an einem ohne Querschnittsreduzierung ausgebildeten Bereich. Alternativ kann selbstverständlich das Distanzelement zwar in gleicher Radialposition, aber nun zwischen Nabenscheibe und abtriebsseitigem Deckblech angeordnet sein.

Die Erfindung ist nachfolgend anhand eines Ausführungsbeispieles erläutert. Es zeigt:
- Fig. 1: Eine radial hälftige Darstellung eines Torsionsschwingungsdämpfers, bei dem ein Radialflansch eines antriebsseitigen Übertragungselementes durch Befestigungselemente an einer Kurbelwelle eines Antriebs befestigt ist; versehen mit einem Distanzelement und einer Reibvorrichtung
- Fig. 2: eine herausgezeichnete Einzelheit Z aus Fig. 1 mit von der Letztgenannten abweichender Anordnung des Distanzelementes;
- Fig. 3: wie Fig. 2, aber in vergrößerter Darstellung mit vergrößertem Radialausschnitt und anderer Positionierung des Distanzelementes sowie der Reibvorrichtung.

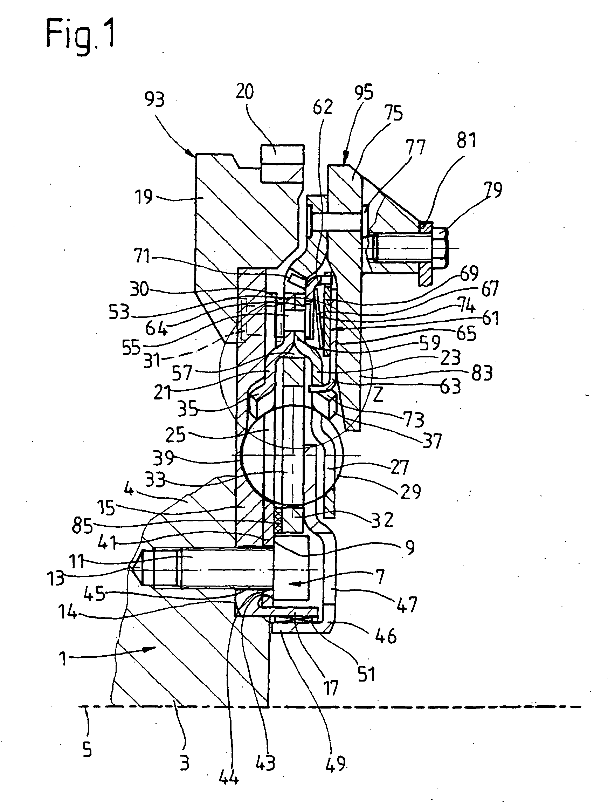

Fig. 1 zeigt einen Torsionsschwingungsdämpfer, der an einem Antrieb 1, wie beispielsweise an einem Kurbelwellenflansch 4 der Kurbelwelle 3 einer Brennkraftmaschine durch Befestigungselemente 7 angebunden ist. Die als Kurbelwellenschrauben ausgebildeten Befestigungselemente 7 verfügen mit dem Schraubenkopf über einen Haltebereich 9, der in einen Verbindungsbereich 11, im konkreten Fall durch den Gewindeschaft gebildet, übergeht. Zur Befestigung des Torsionsschwingungsdämpfers an einer Aufnahmefläche 14 des Kurbelwellenflansches 4 werden die Befestigungselemente 7 in Aufnahmeöffnungen 13 der Kurbelwelle 3 eingebracht, wobei die Aufnahmeöffnungen 13 bei Ausbildung der Befestigungselemente 7 als Kurbelwellenschrauben mit einem deren Gewindeschaft entsprechenden Gewinde versehen sind.

Die Aufnahmefläche 14 des Kurbelwellenflansches 4 dient zur Anlagerung eines sich nach radial außen erstreckenden Radialflansches 15, der an seinem radial inneren Ende mit einem Axialschenkel 17 ausgebildet ist. Radial außen nimmt der Radialflansch 15 einen antriebsseitigen Massering 19 auf, der seinerseits zur Aufnahme eines Zahnkranzes 20 befähigt ist. Bei Verzicht auf den Massering 19 kann alternativ der Zahnkranz 20 unmittelbar an der Außenseite des Radialflansches 15 aufgenommen sein.

Benachbart zum Radialflansch 15 ist ein antriebsseitiges erstes Deckblech 21 vorgesehen, das an im radial äußeren Bereich vorgesehenen Laschen 53 über eine Vernietung 55 mit einem abtriebsseitigen zweiten Deckblech 23 fest verbunden ist. Die beiden Deckbleche 21 und 23 verfügen über Ausnehmungen 25, 27 für in Umfangsrichtung verlaufende Kraftspeicher 29, die sich zudem an Ausnehmungen 33 einer axial mittig zwischen den beiden Deckblechen 21, 23 verlaufenden Nabenscheibe 32 abstützen.

Das erste Deckblech 21 ist im radial inneren Bereich mit einem Radialabschnitt 41 in den Erstreckungsbereich der Befestigungselemente 7 geführt und kommt mit diesem Radialabschnitt 41 unmittelbar an der benachbarten Seite des Radialflansches 15 in Anlage. Das Deckblech 21 weist zum Durchgang je eines Verbindungsbereiches 11 eines Befestigungselementes 7 je eine Öffnung 44 auf, die mit jeweils einem entsprechenden Durchgang 45 im Radialflansch 15 derart ausgerichtet ist, dass der Durchtritt des Verbindungsbereiches 11 des Befestigungselementes 7 gewährleistet ist. Idealerweise fluchten die Öffnungen 44 des Deckbleches 21 mit den Durchgängen 45 des Radialflansches 15. Sobald die die Öffnungen 44 sowie die Durchgänge 45 durchdringenden Verbindungsbereiche 11 der Befestigungselemente 7 so weit in die Aufnahmeöffnungen 13 des Kurbelwellenflansches 4 und damit der Kurbelwelle 3 eingebracht sind, dass jeweils ein Haltebereich 9 eines Befestigungselementes 7 an der dem Haltebereich 9 zugewandten Seite des Deckblechs 21 an einer Anlagefläche 43 desselben unter vorbestimmter Axialkraft zur Anlage kommt, bildet dieses Deckblech 21 gemeinsam mit dem Radialflansch 15 einen Bauteilverbund, der sich einerseits aufgrund eines vergleichsweise großen axialen Querschnittes durch hohe Steifigkeit gegenüber eingeleiteten Taumelbewegungen auszeichnet, und andererseits bei geringen Relativbewegungen von Radialflansch 15 und Deckblech 21 zu leichten Reibungserscheinungen und damit zu einer gewissen Dämpfung befähigt ist. Da zudem für die Deckbleche 21, 23 zur Vermeidung eines torsionsschwingungsbedingten Einarbeitens der Kraftspeicher 29 in die Ausnehmungen 25, 27 mit Vorzug entweder ein hochfester Werkstoff verwendet wird, oder aber die Deckbleche 21, 23 durch festigkeitserhöhende Fertigungsmaßnahmen, wie beispielsweise durch Vergüten, eine höhere Verformungsfestigkeit erfahren, ist aufgrund der jeweils einstückigen Ausbildung der Deckbleche 21, 23 die hohe Verformungsfestigkeit auch im Radialabschnitt 41 des ersten Deckbleches 21 vorhanden, so dass auch dann, wenn der Haltebereich 9 des jeweiligen Befestigungselementes 7 mit vergleichsweise hoher Axialkraft auf die zugeordnete Anlagefläche 43 des Deckbleches 21 einwirkt, das Letztgenannte keine wesentliche Verformung in diesem Bereich erfährt.

Im radial äußeren Bereich des ersten Deckbleches 21 sind, jeweils im Wechsel mit den Laschen 53, radiale Halteansätze 30 vorgesehen, die im Wesentlichen in der Erstreckungsebene der Radialabschnitte 41 nach radial außen verlaufen und demnach ebenso wie der Radialabschnitt 41 an der benachbarten Seite des Radialflansches 15 in Anlage kommen. Diese Halteansätze 30 werden durch eine Vernietung 31 in fester Anlage am Radialflansch 15 gehalten und stabilisieren diesen im radial weit außen liegenden Bereich.

Radial zwischen den Halteansätzen 30 und den Radialabschnitten 41 sind am ersten Deckblech 21 Ausstellungen 35 und am zweiten Deckblech 23 Ausstellungen 37 vorgesehen. Diese Ausstellungen 35, 37 weisen jeweils von der Erstreckungsebene der Deckbleche 21, 23 ausgehend, axial in jeweils von der Nabenscheibe 32 abgewandter Richtung und dienen in bekannter Weise zur fliehkraftabstützenden Führung der Kraftspeicher 29. Die Ausstellungen 35 am ersten Deckblech 21 ragen in eine am Radialflansch 15 vorgesehene Querschnittsreduzierung 39, die durch einen materialverdichtenden Fertigungsvorgang, wie beispielsweise durch Prägen, eingebracht werden kann und dazu dient, durch zumindest teilweise formliche Anpassung an die Kraftspeicher 29 eine kompakte axiale Bauweise des Torsionsschwingungsdämpfers zu realisieren, ohne den Radialflansch 15 für die Kraftspeicher 29 festigkeitsschwächend durchbrechen zu müssen. Durch das Eindringen auch der Ausstellungen 35 in diese Querschnittsreduzierung 39 wird trotz des Vorhandenseins der Ausstellungen 35 kein erhöhter Bauraum benötigt. Die Querschnittsreduzierungen 39 erstrecken sich, in Umfangsrichtung gesehen, zumindest über den von den Kraftspeichern jeweils benötigten Winkelbereich. Alternativ kann eine umlaufende Querschnittsreduzierung im Radialflansch 15 ausgebildet sein.

Die bereits erwähnten Laschen 53 der Deckbleche 21 und 23 greifen mit vorbestimmtem Spiel in Umfangsrichtung in eine zugeordnete Umfangsöffnung 57 der Nabenscheibe 32 ein und bilden dadurch eine Drehwinkelbegrenzung 59, die dann wirksam wird, wenn die Laschen 53 mit ihren umfangsseitigen Enden an der in dieser Wirkrichtung benachbarten Begrenzung der Umfangsöffnungen 57 jeweils zur Anlage gelangen. Hierdurch soll vermieden werden, dass die Kraftspeicher 29 eine übergroße Verformung erfahren und dadurch in ihrem Bestand gefährdet sind.

Selbstverständlich kann eine derartige Drehwinkelbegrenzung 59 nur ein letztes Mittel darstellen, um bei übergroßen Torsionsschwingungen wirksam zu werden. Zuvor jedoch wird die Funktion einer Reibvorrichtung 61 benötigt, die mit einem ersten Mitnehmer 62 in eine Mitnahmeöffnung 71 der Nabenscheibe 32 eingreift und mit einem zweiten Mitnehmer 63 in eine Mitnahmeöffnung 73 des zweiten Deckbleches 23. Die beiden Mitnehmer 62 und 63 sind mit vorbestimmter axialer Spannung beaufschlagbar, und zwar durch einen Axialkraftspeicher 67, der sich einerends am ersten Mitnehmer 62 und anderenends an einem Reibring 69 abstützt, der wiederum mit dem zweiten Mitnehmer 63 in axialer Verbindung steht. Unter der Wirkung des Axialkraftspeichers 67 stützt sich der erste Mitnehmer 62 an einer an der Nabenscheibe 32 ausgebildeten, antriebsseitigen Anlagewandung 64 ab, während der zweite Mitnehmer 63 an seiner vom Axialkraftspeicher 67 abgewandten Seite an einer abtriebsseitigen Anlagewandung 65 zum Angriff kommt, die an einem abtriebsseitigen Massering 75 vorgesehen ist, der über eine Vernietung 77 mit der Nabenscheibe 32 fest verbunden ist. Zur Beibehaltung eines ausreichend großen Spaltes zwischen dem antriebsseitigen Massering 19 und der diesem zugewandten Seite der Nabenscheibe 32 ist die Vernietung 77 an ihrer dem Massering 19 zugewandten Seite versenkt in der Nabenscheibe 32 eingesetzt.

Der abtriebsseitige Massering 75 dient mittels einer Verschraubung 79 zur Aufnahme eines Kupplungsgehäuses 81 einer Reibungskupplung, die in üblicher Weise ausgebildet und daher nicht dargestellt ist. Am abtriebsseitigen Massering 75 ist eine Wirkfläche 83 für eine in dieser Reibungskupplung enthaltene in üblicher Weise ausgebildete Kupplungsscheibe vorgesehen.

An der Nabenscheibe 32 ist in deren radial mittlerem Bereich eine Lagernabe 46 fest angebunden, die im radialen Erstreckungsbereich der Befestigungselemente 7 über Durchtritte 47 für die Befestigungselemente 7 verfügt und radial innerhalb dieser Durchtritte 47 einen Lagerbereich 49 aufweist, der zur Aufnahme einer Lagerung 51 vorgesehen ist und mit dem eingangs erwähnten Axialschenkel 17 des Radialflansches 15 zur Zentrierung der Nabenscheibe 32 gegenüber dem Radialflansch 15 und damit der Kurbelwelle 3 dient.

Im Wesentlichen wird durch den Radialflansch 15, den antriebsseitigen Massering 19, den Zahnkranz 20 und die Deckbleche 21 und 23 ein antriebsseitiges Übertragungselement 93 gebildet, durch die Nabenscheibe 32 inklusive der Lagernabe 46 und dem abtriebsseitigen Massering 75 zusammen mit der Reibungskupplung, symbolisch dargestellt durch das Kupplungsgehäuse 81, ein abtriebseitiges Übertragungselement 95. Während die beiden Übertragungselemente 93 und 95 in bereits beschriebener Weise durch die Lagerung 51 zueinander zentriert sind, ist im radialen Erstreckungsbereich des Radialabschnittes 41 des ersten Deckbleches 21, insbesondere jedoch radial zwischen den Kraftspeichern 29 und den Befestigungselementen 7, ein vorzugsweise ringförmiges Distanzelement 85 vorgesehen, das aus Kunststoff ausgebildet sein kann und für eine axiale Positionierung der Übertragungselemente 93 und 95 zueinander sorgt. Beispielsweise werden beim Ein- oder Ausrücken der nicht gezeigten Reibungskupplung eingeleitete Axialkräfte von der Nabenscheibe 32 über das Distanzelement 85 unmittelbar auf das erste Deckblech 21 und damit über den Radialflansch 15 auf den Kurbelwellenflansch 4 der Kurbelwelle 3 des Antriebs 1 geleitet, sodass aufgrund der direkten Kraftweiterleitung zum Antrieb 1 eine hohe Verformungssteifigkeit in Achsrichtung besteht.

Auch die Reibvorrichtung 61 kann ohne Nachteile bei Einleitung von Axialkräften betrieben werden, da sie, wie bereits erläutert, zwischen von Anlagewandungen 64, 65 jeweils des gleichen Übertragungselementes, im vorliegenden Fall des abtriebsseitigen Übertragungselementes 95, angeordnet ist, und zwar mit Vorzug in einem im Übertragungselement 95 ausgebildeten Aufnahmeraum 74.

Fig. 2 zeigt wiederum ein Distanzelement 85 in axialer Anordnung zwischen dem ersten Deckblech 21 und der Nabenscheibe 32, jetzt allerdings radial zwischen der Drehwinkelbegrenzung 59 und den Ausstellungen 35 am ersten Deckblech 21. Auch an dieser radialen Stelle ergibt sich der Vorteil einer unmittelbaren Anlage des Deckbleches 21 am benachbarten Radialflansch 15 und damit einer hohen Verformungssteifigkeit in Achsrichtung. Das Distanzelement kann an der in Fig. 2 gezeigten Position alternativ zu der in Fig. 1 gezeigten Position oder ergänzend zu der Letztgenannten eingesetzt sein. Ebenso verhält sich die Situation bei der in Fig. 3 gezeigten Position des Distanzelementes 85, die dieses radial zwischen der Drehwinkelbegrenzung 59 und den Ausstellungen 37 des zweiten Deckbleches 23 zeigt, jetzt allerdings axial zwischen der Nabenscheibe 32 und dem zweiten Deckblech 23.

Darüber hinaus ist in Fig. 3 die Reibvorrichtung 61 in einem Bereich axial zwischen den beiden Übertragungselementen 93 und 95 vorgesehen, und weist wiederum den ersten Mitnehmer 62 auf, der in eine an der Nabenscheibe 32 vorgesehene Mitnahmeöffnung 71 eingreift und damit in Drehverbindung mit dem abtriebsseitigen Übertragungselement 95 steht, während ein zweiter Mitnehmer 90 mit einer Mitnahmeöffnung 91 im Radialflansch 15 des antriebsseitigen Übertragungselementes 93 in Drehverbindung steht. Bei dieser Anordnung der Reibvorrichtung 61 dient die der Nabenscheibe 32 zugewandte Seite des antriebseitigen Masseringes 19 als antriebsseitige Anlagewandung 87 und die dem Massering 19 zugewandte Seite der Nabenscheibe 32 als abtriebsseitige Anlagewandung 89. Der die beiden Mitnehmer 62 und 90 beaufschlagende Axialkraftspeicher 67 stützt sich einerseits an der antriebsseitigen Anlagewandung 87 und andererseits am zweiten Mitnehmer 90 ab, der sich über den ersten Mitnehmer 62 wiederum an der abtriebsseitigen Wandung 89 abstützt. Wie auch bei der Reibvorrichtung 61 in Fig. 1 ist die Reibvorrichtung der Fig. 3 radial weit außen im Torsionsschwingungsdämpfer angeordnet, um bei geringem Verschleiß vergleichsweise hohe Reibmomente liefern zu können.

### Bezugszeichenliste

- 1: Antrieb
- 3: Kurbelwelle
- 4: Kurbelwellenflansch
- 5: Drehachse
- 7: Befestigungselemente
- 9: Haltebereich
- 11: Verbindungsbereich
- 13: Aufnahmeöffnung
- 14: Aufnahmefläche
- 15: Radialflansch
- 17: Axialschenkel
- 19: antriebsseitiger Massering
- 20: Zahnkranz
- 21: erstes Deckblech
- 23: zweites Deckblech
- 25,27: Ausnehmungen für Kraftspeicher
- 29: Kraftspeicher
- 30: Halteansatz
- 31: Vernietung
- 32: Nabenscheibe
- 33: Ausnehmungen für Kraftspeicher
- 35,37: Ausstellungen
- 39: Querschnittsreduzierung
- 41: Radialabschnitt des ersten Deckblechs
- 43: Anlagefläche
- 44: Öffnungen
- 45: Durchgänge
- 46: Lagernabe
- 47: Durchtritte
- 49: Lagerbereich
- 51: Lagerung
- 53: Laschen
- 55: Vernietung
- 57: Umfangsöffnungen
- 59: Drehwinkelbegrenzung
- 61: Reibvorrichtung
- 62: erster Mitnehmer
- 63: zweiter Mitnehmer
- 64: antriebsseitige Anlagewandung
- 65: abtriebsseitige Anlagewandung
- 67: Axialspeicher
- 69: Reibring
- 71,73: Mitnahmeöffnungen
- 74: Aufnahmeraum
- 75: abtriebsseitige Massering
- 77: Vernietung
- 79: Verschraubung
- 81: Kupplungsgehäuse
- 83: Wirkfläche für Kupplungsscheibe
- 85: Distanzelement
- 87: antriebsseitige Anlagewandung
- 89: abtriebsseitige Anlagewandung
- 90: Mitnehmer
- 91: Mitnahmeöffnung
- 93: antriebsseitiges Übertragungselement
- 95: abtriebsseitiges Übertragungselement

## Patentansprüche

1. Torsionsschwingungsdämpfer mit einem antriebsseitigen Übertragungselement, das an einen Antrieb, wie die Kurbelwelle einer Brennkraftmaschine, mittels Befestigungselementen angebunden ist, mit einem abtriebsseitigen Übertragungselement, das relativ zu dem antriebsseitigen Übertragungselement drehbar ist, und mit einer zwischen den beiden Übertragungselementen vorgesehenen Dämpfungsvorrichtung, die mit den Übertragungselementen in Wirkverbindung stehende elastisch verformbare Kraftspeicher aufweist, wobei das antriebsseitige Übertragungselement über einen an einer Aufnahmefläche des Antriebs befestigten, mit Durchgängen für Verbindungsbereiche für die Befestigungsmittel versehenen Radialflansch und zumindest ein mit demselben fest verbundenes Deckblech verfügt, das wenigstens im Erstreckungsbereich der Befestigungselemente mit zumindest einem axial zwischen je einem Haltebereich der Befestigungselemente und dem Radialflansch verlaufenden Radialabschnitt versehen ist, der zum Durchtritt der Verbindungsbereiche der Befestigungselemente Öffnungen aufweist, die für eine Passage der Verbindungsbereiche der Befestigungselemente bis in den Antrieb in Bezug zu den Durchgängen im Radialflansch ausgerichtet sind,
**dadurch gekennzeichnet,**
**dass** jeweils ein Haltebereich (9) eines Befestigungselementes (7) an der dem Haltebereich (9) zugewandten Seite des Deckbleches (21) an einer Anlagefläche (43) desselben unter vorbestimmter Axialkraft zur Anlage kommt, und das Deckblech (21) zumindest im Bereich dieser Anlagefläche (43) für je einen Haltebereich (9) der Befestigungselemente (7) an seinem Radialabschnitt (41) über eine höhere Verformungsfestigkeit als der Radialflansch (15) verfügt.

2. Torsionsschwingungsdämpfer nach Anspruch 1,
**dadurch gekennzeichnet,**
**dass** das Deckblech (21) seine gegenüber dem Radialflansch (15) höhere Verformungsfestigkeit durch Verwendung eines hochfesten Werkstoffes erhält.

3. Torsionsschwingungsdämpfer nach Anspruch 2,
**dadurch gekennzeichnet,**
**dass** das Deckblech (21) seine gegenüber dem Radialflansch (15) höhere Verformungsfestigkeit durch festigkeitserhöhende Fertigungsmaßnahmen, wie Vergüten, erhält.

4. Torsionsschwingungsdämpfer nach Anspruch 1, 2 oder 3 mit einem Deckblech, das zur Aufnahme der Kraftspeicher Ausnehmungen aufweist, während der Radialflansch im radialen Erstreckungsbereich der Kraftspeicher mit einer zumindest teilweise der Umfangskontur der Kraftspeicher angepassten Querschnittsreduzierung ausgebildet ist,
**dadurch gekennzeichnet,**
**dass** das Deckblech (21) radial außerhalb der Ausnehmungen (25) für die Kraftspeicher (29) mit Ausstellungen (35) versehen ist, die eine Erstreckungskomponente in Achsrichtung aufweisen und in die benachbarte Querschnittsreduzierung (39) des Radialflansches (15) eintauchen.

5. Torsionsschwingungsdämpfer nach Anspruch 4,
**dadurch gekennzeichnet,**
**dass** die Querschnittsreduzierung (39) im Radialflansch (15) durch fertigungsbedingte Materialverdichtung, wie Prägen, erfolgt.

6. Torsionsschwingungsdämpfer nach einem der Ansprüche 1 bis 5 mit einer in Umfangsrichtung wirksamen Drehwinkelbegrenzung zwischen dem wenigstens einen Deckblech und der Nabenscheibe,
**dadurch gekennzeichnet,**
**dass** das Deckblech (21) des antriebsseitigen Übertragungselementes (93) zur Bildung der Drehwinkelbegrenzung (59) für die beiden Übertragungselemente (93, 95) mit wenigstens einer Lasche (53) unter vorbestimmtem Spiel in Umfangsrichtung in eine Umfangsöffnung (57) der Nabenscheibe (32) des abtriebsseitigen Übertragungselementes (95) eingreift, wobei die Lasche (53) als Axialfreistellung (54) ausgebildet ist.

7. Torsionsschwingungsdämpfer nach einem der Ansprüche 1 bis 6 mit einem zweiten Deckblech, das mit dem dem Radialflansch benachbarten ersten Deckblech drehfest verbunden ist,
**dadurch gekennzeichnet,**
**dass** das erste Deckblech (21) im Erstreckungsbereich der Lasche (53) der Drehwinkelbegrenzung (59) mit dem zweiten Deckblech (23) verbunden ist, das ebenfalls mit einer zur Bildung der Drehwinkelbegrenzung (59) beitragenden Lasche (53) ausgebildet ist, die unter vorbestimmtem Spiel in Umfangsrichtung in die entsprechende Umfangsöffnung (57) der Nabenscheibe (32) eingreift.

8. Torsionsschwingungsdämpfer nach einem der Ansprüche 1 bis 7 mit einem abtriebsseitigen Übertragungselement, das eine Nabenscheibe mit einer derselben zugeordneten Lagernabe zum Angriff an der vom ersten Übertragungselement gehaltenen Lagerung aufweist
**dadurch gekennzeichnet,**
**dass** die Lagernabe (46) an der Nabenscheibe (32) befestigt ist,

9. Torsionsschwingungsdämpfer nach einem der Ansprüche 1 bis 8 mit einem axial zwischen den beiden Übertragungselementen wirksamen Distanzelement,
**dadurch gekennzeichnet,**
**dass** das Distanzelement (85) mit einer Axialseite an dem antriebsseitigen Deckblech (21) und mit seiner anderen Axialseite an der Nabenscheibe (32) zur Anlage kommt.

10. Torsionsschwingungsdämpfer nach Anspruch 9,
**dadurch gekennzeichnet,**
**dass** das Distanzelement (85) radial unmittelbar benachbart zu den Anlageflächen (43) der Befestigungselemente (7) vorgesehen ist.

11. Torsionsschwingungsdämpfer nach einem der Ansprüche 1 bis 8,
**dadurch gekennzeichnet,**
**dass** das Distanzelement (85) mit einer Axialseite an der Nabenscheibe (32) und mit seiner anderen Axialseite an dem antriebsseitigen Deckblech (21) zur Anlage kommt.

12. Torsionsschwingungsdämpfer nach Anspruch 9 oder 10,
**dadurch gekennzeichnet,**
**dass** das Distanzelement (85) radial außerhalb der Kraftspeicher (29) vorgesehen ist.

13. Torsionsschwingungsdämpfer nach Anspruch 12,
**dadurch gekennzeichnet,**
**dass** das Distanzelement (85) radial zwischen den Laschen (53) der Drehwinkelbegrenzung (59) und den Ausstellungen (35, 37) des jeweils benachbarten Deckbleches (21, 23) angeordnet ist.

14. Torsionsschwingungsdämpfer nach einem der Ansprüche 1 bis 13 mit einer zwischen den beiden Übertragungselementen wirksamen Reibvorrichtung,
**dadurch gekennzeichnet,**
**dass** die Reibvorrichtung (61) über zwei Mitnehmer (62, 63; 63, 90), von denen jeder mit je einem Übertragungselement (93, 95) in Drehverbindung steht, sowie über einen die beiden Mitnehmer (62, 63; 63, 90) beaufschlagenden Axialkraftspeicher (67) verfügt.

15. Torsionsschwingungsdämpfer nach Anspruch 14,
**dadurch gekennzeichnet,**
**dass** ein Mitnehmer (62; 90) mit einem der beiden Deckbleche (21; 23) und der andere Mitnehmer (63) mit der Nabenscheibe (32) in Drehverbindung steht.

16. Torsionsschwingungsdämpfer nach einem der Ansprüche 14 oder 15,
**dadurch gekennzeichnet,**
**dass** die Reibvorrichtung (61) in einem Aufnahmeraum (74) eines der beiden Übertragungselemente (93, 95) angeordnet ist.

17. Torsionsschwingungsdämpfer nach Anspruch 16 mit einem am abtriebsseitigen Übertragungselement vorgesehenen Massering,
**dadurch gekennzeichnet,**
**dass** der Aufnahmeraum (74) im abtriebsseitigen Übertragungselement (95) angeordnet ist und axial durch zwei Anlagewandungen (64, 65) begrenzt ist, von denen die antriebsseitige Anlagewandung (64) an der Nabenscheibe (32) und die abtriebsseitige Anlagewandung (65) an dem Massering (75) ausgebildet ist.

18. Torsionsschwingungsdämpfer nach einem der Ansprüche 14 bis 17,
**dadurch gekennzeichnet,**
**dass** die Reibvorrichtung (61) radial außerhalb der Kraftspeicher (29) angeordnet ist.

19. Torsionsschwingungsdämpfer nach einem der Ansprüche 14 bis 17,
**dadurch gekennzeichnet,**
**dass** die Reibvorrichtung (61) radial außerhalb der Drehwinkelbegrenzung (59) angeordnet ist.

## Claims

1. Torsional vibration damper having a drive-side transmission element which is attached to a drive, such as the crankshaft of an internal combustion engine, by means of fastening elements, having an output-side transmission element which can be rotated relative to the drive-side transmission element, and having a damping apparatus which is provided between the two transmission elements and has elastically deformable force accumulators which are operatively connected to the transmission elements, the drive-side transmission element having a radial flange which is fastened to a holding surface of the drive and is provided with passages for connecting regions for the fastening means, and having at least one cover plate which is connected fixedly to the said radial flange and is provided, at least in the extension region of the fastening elements, with at least one radial section which extends axially between in each case one holding region of the fastening elements and the radial flange and has openings for the passage of the connecting regions of the fastening elements, which openings are oriented in the radial flange in relation to the passages for passage of the connecting regions of the fastening elements into the drive, **characterized in that** in each case one holding region (9) of a fastening element (7) comes into contact on that side of the cover plate (21) which faces the holding region (9) with a contact surface (43) of the same under a predefined axial force, and the cover plate (21) has a higher deformability strength than the radial flange (15), at least in the region of this contact surface (43) for in each case one holding region (9) of the fastening elements (7) on its radial section (41).

2. Torsional vibration damper according to Claim 1, **characterized in that** the cover plate (21) obtains its higher deformability strength than the radial flange (15) from use of a high-strength material.

3. Torsional vibration damper according to Claim 2, **characterized in that** the cover plate (21) obtains its higher deformability strength than the radial flange (15) from manufacturing measures which increase the strength, such as hardening and tempering.

4. Torsional vibration damper according to Claim 1, 2 or 3, having a cover plate which has recesses for accommodating the force accumulators, while the radial flange is configured in the radial extension region of the force accumulators with a cross-sectional reduction which is adapted at least partially to the circumferential contour of the force accumulators, **characterized in that** the cover plate (21) is provided with protuberances (35) radially outside the recesses (25) for the force accumulators (29), which protuberances (35) have an extension component in the axial direction and dip into the adjacent cross-sectional reduction (39) of the radial flange (15).

5. Torsional vibration damper according to Claim 4, **characterized in that** the cross-sectional reduction (39) in the radial flange (15) is effected by manufacturing-induced material compression, such as stamping.

6. Torsional vibration damper according to one of Claims 1 to 5, having a rotational-angle limitation means which is active in the circumferential direction between the at least one cover plate and the hub plate, **characterized in that** the cover plate (21) of the drive-side transmission element (93), in order to form the rotational-angle limitation means (59) for the two transmission elements (93, 95), engages with at least one tab (53) with predefined play in the circumferential direction into a circumferential opening (57) of the hub plate (32) of the output-side transmission element (95), the tab (53) being configured as an axial clearance (54).

7. Torsional vibration damper according to one of Claims 1 to 6, having a second cover plate which is connected fixedly in terms of rotation to the first cover plate which adjoins the radial flange, **characterized in that**, in the extension region of the tab (53) of the rotational-angle limitation means (59), the first cover plate (21) is connected to the second cover plate (23) which is likewise configured with a tab (53) which contributes to the formation of the rotational-angle limitation means (59) and engages with predefined play in the circumferential direction into the corresponding circumferential opening (57) of the hub plate (32).

8. Torsional vibration damper according to one of Claims 1 to 7, having an output-side transmission element which has a hub plate with a bearing hub which is assigned to the latter for acting on the bearing which is held by the first transmission element, **characterized in that** the bearing hub (46) is fastened to the hub plate (32).

9. Torsional vibration damper according to one of Claims 1 to 8, having a spacer element which is active axially between the two transmission elements, **characterized in that** the spacer element (85) comes into contact with one axial side on the output-side cover plate (21) and with its other axial side on the hub plate (32).

10. Torsional vibration damper according to Claim 9, **characterized in that** the spacer element (85) is provided radially immediately adjacent to the contact surfaces (43) of the fastening elements (7).

11. Torsional vibration damper according to one of Claims 1 to 8, **characterized in that** the spacer element (85) comes into contact with one axial side on the hub plate (32) and with its other axial side on the drive-side cover plate (21).

12. Torsional vibration damper according to Claim 9 or 10, **characterized in that** the spacer element (85) is provided radially outside the force accumulators (29).

13. Torsional vibration damper according to Claim 12, **characterized in that** the spacer element (85) is arranged radially between the tabs (53) of the rotational-angle limitation means (59) and the protuberances (35, 37) of the respectively adjacent cover plate (21, 23).

14. Torsional vibration damper according to one of Claims 1 to 13, having a friction apparatus which is active between the two transmission elements, **characterized in that** the friction apparatus (61) has two drivers (62, 63; 63, 90), of which each is connected rotationally to in each case one transmission element (93, 95), and an axial force accumulator (67) which acts on the two drivers (62, 63; 63, 90).

15. Torsional vibration damper according to Claim 14, **characterized in that** a driver (62; 90) is connected rotationally to one of the two cover plates (21; 23) and the other driver (63) is connected rotationally to the hub plate (32).

16. Torsional vibration damper according to either of Claims 14 and 15, **characterized in that** the friction apparatus (61) is arranged in a receptacle space (74) of one of the two transmission elements (93, 95).

17. Torsional vibration damper according to Claim 16, having a mass ring which is provided on the output-side transmission element, **characterized in that** the receptacle space (74) is arranged in the output-side transmission element (95) and is delimited axially by two contact walls (64, 65), of which the drive-side contact wall (64) is formed on the hub plate (32) and the output-side contact wall (65) is formed on the mass ring (75).

18. Torsional vibration damper according to one of Claims 14 to 17, **characterized in that** the friction apparatus (61) is arranged radially outside the force accumulators (29).

19. Torsional vibration damper according to one of Claims 14 to 17, **characterized in that** the friction apparatus (61) is arranged radially outside the rotational-angle limitation means (59).

## Revendications

1. Amortisseur de vibrations de torsion avec un élément de transmission côté entraînement, qui est relié à un entraînement - comme un vilebrequin d'un moteur à combustion interne - par des éléments de fixation, avec un élément de transmission côté sortie, qui peut tourner par rapport à l'élément de transmission côté entraînement, et avec un dispositif d'amortissement prévu entre les deux éléments de transmission, qui comporte des accumulateurs de force déformables élastiquement montés en liaison active avec les éléments de transmission, dans lequel l'élément de transmission côté entraînement comprend une bride radiale fixée sur une face de réception de l'entraînement et pourvue de passages pour des zones d'assemblage pour les moyens de fixation ainsi qu'au moins une tôle de couvercle fermement assemblée à celle-ci, qui est pourvue, au moins dans la région d'extension des éléments de fixation, d'au moins une partie radiale située axialement entre une région de maintien de chacun des éléments de fixation et la bride radiale, qui présente, pour le passage des régions d'assemblage des éléments de fixation, des ouvertures qui sont orientées par rapport aux passages dans la bride radiale pour un passage des régions d'assemblage des éléments de fixation jusque dans l'entraînement, **caractérisé en ce que** chaque fois une région de maintien (9) d'un élément de fixation (7) vient s'appliquer sur le côté de la tôle de couvercle (21) tourné vers la région de maintien (9) sur une face d'application (43) de celui-ci sous une force axiale prédéterminée, et la tôle de couvercle (21) présente, au moins dans la région de cette face d'application (43) pour chaque fois une région de maintien (9) des éléments de fixation (7) sur sa partie radiale (41), une résistance à la déformation plus élevée que la bride radiale (15).

2. Amortisseur de vibrations de torsion selon la revendication 1, **caractérisé en ce que** la tôle de couvercle (21) doit sa résistance à la déformation plus élevée que la bride radiale (15) à l'utilisation d'une matière à haute résistance.

3. Amortisseur de vibrations de torsion selon la revendication 2, **caractérisé en ce que** la tôle de couvercle (21) doit sa résistance à la déformation plus élevée que la bride radiale (15) à des mesures de fabrication augmentant la résistance, comme un traitement thermique.

4. Amortisseur de vibrations de torsion selon la revendication 1, 2 ou 3 avec une tôle de couvercle, qui présente des évidements destinés à recevoir des accumulateurs de force, tandis que la bride radiale est formée dans la région d'extension radiale des accumulateurs de force avec une diminution de section transversale adaptée au moins en partie au contour périphérique des accumulateurs de force, **caractérisé en ce que** la tôle de couvercle (21) est pourvue, radialement à l'extérieur des évidements (25) pour les accumulateurs de force (29), de déviations (35) qui présentent une composante d'extension en direction axiale et qui plongent dans la diminution de section transversale voisine (39) de la bride radiale (15).

5. Amortisseur de vibrations de torsion selon la revendication 4, **caractérisé en ce que** la diminution de section transversale (39) dans la bride radiale (15) est réalisée par une compression de matière due à la fabrication, comme un gaufrage.

6. Amortisseur de vibrations de torsion selon l'une quelconque des revendications 1 à 5, avec une limitation d'angle de rotation agissant en direction périphérique entre la au moins une tôle de couvercle et le disque de moyeu, **caractérisé en ce que**, pour former la limitation d'angle de rotation (59) pour les deux éléments de transmission (93, 95), la tôle de couvercle (21) de l'élément de transmission côté entraînement (93) s'engage avec au moins une patte (53), avec un jeu prédéterminé en direction périphérique, dans une ouverture périphérique (57) du disque de moyeu (32) de l'élément de transmission côté sortie (95), dans lequel la patte (53) est formée par un dégagement axial (54).

7. Amortisseur de vibrations de torsion selon l'une quelconque des revendications 1 à 6 avec une deuxième tôle de couvercle, qui est calée en rotation sur la première tôle de couvercle voisine de la bride radiale, **caractérisé en ce que** la première tôle de couvercle (21) est assemblée dans la région d'extension de la patte (53) de la limitation d'angle de rotation (59) à la deuxième tôle de couvercle (23), qui est également réalisée avec une patte (53) contribuant à la formation de la limitation d'angle de rotation (59), patte qui s'engage avec un jeu prédéterminé en direction périphérique dans l'ouverture périphérique correspondante (57) du disque de moyeu (32).

8. Amortisseur de vibrations de torsion selon l'une quelconque des revendications 1 à 7, avec un élément de transmission côté sortie, qui comprend un disque de moyeu avec un moyeu de support associé à celui-ci pour s'appuyer sur le support tenu par le premier élément de transmission, **caractérisé en ce que** le moyeu de support (46) est fixé sur le disque de moyeu (32).

9. Amortisseur de vibrations de torsion selon l'une quelconque des revendications 1 à 8 avec un élément d'écartement axial actif entre les deux éléments de transmission, **caractérisé en ce que** l'élément d'écartement (85) vient en contact par un côté axial avec la tôle de couvercle côté entraînement (21) et par son autre côté axial avec le disque de moyeu (32).

10. Amortisseur de vibrations de torsion selon la revendication 9, **caractérisé en ce que** l'élément d'écartement (85) est prévu à proximité radiale directe des faces d'application (43) des éléments de fixation (7).

11. Amortisseur de vibrations de torsion selon l'une quelconque des revendications 1 à 8, **caractérisé en ce que** l'élément d'écartement (85) vient en contact par un côté axial avec le disque de moyeu (32) et par son autre côté axial avec la tôle de couvercle côté entraînement (21).

12. Amortisseur de vibrations de torsion selon la revendication 9 ou 10, **caractérisé en ce que** l'élément d'écartement (85) est prévu radialement à l'extérieur des accumulateurs de force (29).

13. Amortisseur de vibrations de torsion selon la revendication 12, **caractérisé en ce que** l'élément d'écartement (85) est disposé radialement entre les pattes (53) de la limitation d'angle de rotation (59) et les déviations (35, 37) de la tôle de couvercle (21, 23) respectivement voisine.

14. Amortisseur de vibrations de torsion selon l'une quelconque des revendications 1 à 13 avec un dispositif de friction actif entre les deux éléments de transmission, **caractérisé en ce que** le dispositif de friction (61) comprend deux entraîneurs (62, 63; 63, 90) dont chacun est en liaison rotative chaque fois avec un élément de transmission (93, 95), ainsi qu'un accumulateur de force axial (67) agissant sur les deux entraîneurs (62, 63; 63, 90).

15. Amortisseur de vibrations de torsion selon la revendication 14, **caractérisé en ce qu'**un entraîneur (62; 90) est en liaison rotative avec une des deux tôles de couvercle (21; 23) et l'autre entraîneur (63) est en liaison rotative avec le disque de moyeu (32).

16. Amortisseur de vibrations de torsion selon l'une des revendications 14 ou 15, **caractérisé en ce que** le dispositif de friction (61) est disposé dans un espace de réception (74) d'un des deux éléments de transmission (93, 95).

17. Amortisseur de vibrations de torsion selon la revendication 16 avec un anneau de masse prévu sur l'élément de transmission côté sortie, **caractérisé en ce que** l'espace de réception (74) est disposé dans l'élément de transmission côté sortie (95) et est limité axialement par deux parois d'appui (64, 65), dont la paroi d'appui côté entraînement (64) est formée sur le disque de moyeu (32) et la paroi d'appui côté sortie (65) est formée sur l'anneau de masse (75).

18. Amortisseur de vibrations de torsion selon l'une quelconque des revendications 14 à 17, **caractérisé en ce que** le dispositif de friction (61) est disposé radialement à l'extérieur des accumulateurs de force (29).

19. Amortisseur de vibrations de torsion selon l'une quelconque des revendications 14 à 17, **caractérisé en ce que** le dispositif de friction (61) est disposé radialement à l'extérieur de la limitation d'angle de rotation (59).
